# EUROPEAN PATENT APPLICATION

(11) **EP 1 452 341 A2**
(43) Date of publication of application: **01.09.2004**
(21) Application number: 04250987.7
(22) Date of filing: 24.02.2004
(51) Int. Cl.: B60B 33/00, B60B 33/04

(54) **Castor assembly and mounting bracket thereof**

(30) Priority: 25.02.2003 GB 0304240
(71) Applicant: Spire Group Limited, Aldridge, Walsall WS9 8UG (GB)
(72) Inventor: Potts, Robert, Cannock Staffordshire WS11 1EU (GB); Malan, Ken, DECEASED (GB)
(74) Representative: Gee, Steven William

(57) **Abstract**

This invention relates to a castor assembly (10), in particular for fitment to a bed or the like. The castor assembly (10) comprises a castor (12) and a mounting bracket (14), the castor having a wheel (22) which is rotatably mounted on an axle (26), the axle being mounted upon a support bracket (24), the support bracket being connected to the mounting bracket (14). The castor is movable relative to the mounting bracket between a use position (U) in which it can engage the floor and support part of the weight of the bed or the like, and a transport position (T) in which it projects beyond the bottom of the bed or the like by a smaller distance and so is less liable to become damaged, or to cause damage, during storage and transportation. Repeated movements between the use position and the storage position can be undertaken as required.

## Description

### FIELD OF THE INVENTION

This invention relates to a castor assembly and to a mounting bracket thereof, and in particular to a castor assembly for fitment to a bed or the like. The castor has particular advantages when used on a bed, and the following description will relate primarily to such use. However, use of the castor assembly on other articles is not thereby excluded.

### DESCRIPTION OF THE PRIOR ART

Castor assemblies are in widespread use upon beds and other furniture items. A castor assembly comprises a castor and a mounting bracket therefor. Typically, the castor comprises a small wheel mounted to rotate about an axle, the axle being carried upon a support bracket which can swivel about an axis substantially perpendicular to the axle. The castor is mounted upon the item of furniture by way of the mounting bracket which has a socket into which is located a shaft connected to the support bracket of the castor. When the bed is moved across the floor, the support bracket swivels about the shaft to align the castor wheel with the direction of movement, and the wheel then rotates so that the bed can be moved. In this way, the castors fitted to the bed allow the bed to be moved across the floor without being lifted off the floor.

Since the wheel of the castor must engage the floor in use, at least part of the wheel (and usually most of the support bracket also) project beyond the bottom edge of the bed. During storage and transportation, however, the projecting wheel can foul other items of furniture or surrounding structures, either becoming damaged itself or causing damage to other items of furniture or the surrounding structures.

During delivery of a bed, for example, a projecting castor can impact the frame of a doorway, often resulting in damage, as well as making it more difficult (or perhaps impossible) for the bed to pass through the doorway.

For the above reasons, it is typical to store and transport beds without the castors fitted. The mounting brackets are fitted to the bed and the castors are supplied with the bed to be fitted by the delivery personnel or the purchaser.

It is inconvenient (at least) for a purchaser to have to fit the castors, especially if the purchaser is elderly and/or infirm. Thus, whilst the castor shaft will usually be designed to be a "snap-fit" into the socket so that specialised tools are not required, the purchaser still requires some dexterity and strength to fit the castors.

It is also necessary for the manufacturer of the bed to take additional care with inventory, i.e. additional production control steps must be taken to ensure that the correct number of castors (perhaps of the correct type) are supplied with the bed and remain with the bed during storage and transportation.

Furthermore, any manufacturing or assembly fault in the mounting bracket or the castor which prevents the castor being fitted correctly will not be apparent until the customer seeks to fit the castor, resulting in additional costs to the manufacturer in having to correct a fault away from the manufacturing location, as well as further inconvenience for the customer.

Whilst the castor can be supplied separately to the bed when initially purchased, the "snap-fit" connection of the shaft into the socket usually renders the removal of the shaft from the socket difficult or impossible. Thus, should the customer subsequently require to store or transport the bed again, perhaps because the customer is moving house, the castors cannot be removed, and the problems associated with projecting castors cannot be avoided. The likelihood of damage being caused by the projecting castors is increased if the customer does not have suitable packaging materials with which to cover and protect the projecting castors, or does not take adequate precautions to ensure that the castors are properly protected, as is often the case.

### SUMMARY OF THE INVENTION

The present invention seeks to reduce or avoid the problems set out above which are associated with the known castors.

According to the invention therefore, there is provided a castor assembly comprising a castor and a mounting bracket therefor, the castor having a wheel which is rotatably mounted on an axle, the axle being mounted upon a support bracket, the support bracket being connected to the mounting bracket, characterised in that the castor is movable relative to the mounting bracket between a transport position and a use position.

When in the use position the support bracket can swivel relative to the mounting bracket in normal fashion. When in the transport position the castor wheel projects by a lesser distance from the item of furniture to which it is fitted (and in some cases does not project at all), so that the item of furniture can be transported complete with all of its castors and yet with less danger of damage being caused to the castors or to other items of furniture or surrounding structures.

Desirably, the castor has a shaft means and the mounting bracket has a cooperating socket by which the castor is connected to the mounting bracket.

Preferably, the shaft means is pivotable between its use position and its transport position. Desirably, the shaft means is pivotable through an angle of approximately 90°.

Preferably, the shaft means has a longitudinal axis, and is longitudinally movable relative to the mounting bracket, movement between the use position and the transport position involving longitudinal movement of the shaft followed by pivoting movement thereof.

Preferably, the shaft means is retained by the socket in its transport position, so that addtional means to prevent separation of the castor from the socket are not required.

Desirably, the shaft means carries at least one lug and the socket has at least one cooperating channel within which the lug(s) can slide. The lug(s) and channel(s) can substantially prevent rotation of the shaft about its longitudinal axis within the socket (rotation of the support bracket relative to the socket in such arrangements being achieved by a rotatable connection between the shaft means and the support bracket as with known castors).

Desirably also, the mounting bracket has a cap member with an opening large enough to accommodate the shaft means but not large enough to accommodate the lug(s), so that the cap member serves to retain the shaft means to the mounting bracket.

Preferably, the cap member includes at least one channel(s) for the lug(s), the channel(s) being curved to accommodate pivoting movement of the shaft means.

Desirably, the mounting bracket includes a mounting portion adapted to enable the mounting bracket to be secured to the item of furniture. Preferably, the mounting portion is substantially annular and surrounds the socket, and has a recess to accommodate the shaft means in its transport position. Desirably, the recess includes at least one rib adapted to retain the shaft means in its transport position.

There is also provided a mounting bracket for use with a castor assembly as herein defined.

### BRIEF DESCRIPTION OF THE DRAWINGS

The invention will now be described, by way of example, with reference to the accompanying drawings, in which:
- Fig.1: shows a sectional side view of the mounting bracket according to the invention, with the castor shown in its use position and transport position in dotted outline;
- Fig.2: shows a sectional view along the line II-II of Fig.1, with the castor shown in its use position in dotted outline;
- Fig.3: shows a plan view of the mounting bracket;
- Fig.4: shows a plan view of the mounting bracket with the cap member removed;
- Fig.5: shows a sectional view along the line V-V of Fig.4;
- Fig.6: shows a sectional view along the line VI-VI of Fig.4;
- Fig.7: shows a side view of the shaft of the castor;
- Fig.8: shows a plan view of the shaft;
- Fig.9: shows an underneath plan view of the cap member; and,
- Fig.10: shows a sectional view along the line X-X of Fig.9

### DESCRIPTION OF THE PREFERRED EMBODIMENTS

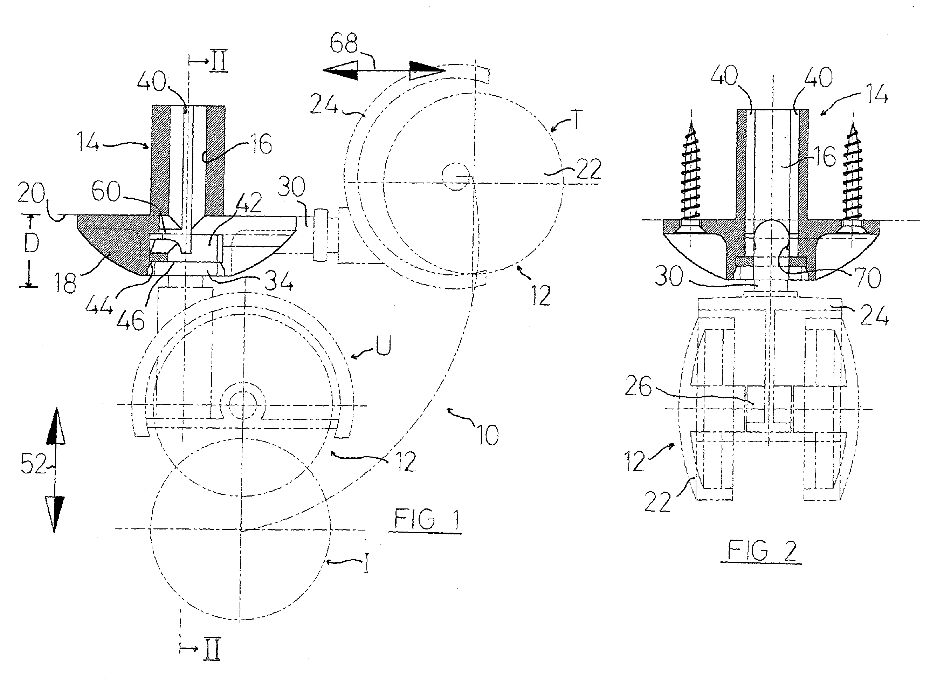

The castor assembly 10 shown in Figs.1 and 2 comprises a castor 12 (shown in dotted outline) and a mounting bracket 14. As seen in Fig.1, the castor 12 is movable relative to the mounting bracket 14 between a use position identified as "U" and a storage or transport position identified as "T".

The mounting bracket 14 has a socket 16 and a mounting portion 18. It will be understood that (in common with prior art castor assemblies) the socket 16 is located within a hole or recess formed in the bottom surface of the bed to which the castor is to be fitted (see the surface 20), and the mounting portion 18 lies upon that surface and can be secured thereto by way of screws or the like (see Fig.2). The surface 20 therefore represents that part of the bed to which the mounting bracket is secured (or is to be secured).

The surface 20 may be the bottom peripheral surface of the bed, in which case in this embodiment the castor in its transport position will project beyond the bottom of the bed by a distance D which is only slightly greater than the depth of the mounting portion 18 of the mounting bracket 14. Alternatively of course, the surface 20 can be inside the peripheral surface of the bed, i.e. the surface 20 may lie within a recess or rebate in the bed, so that the castor in its transport position projects beyond the bottom of the bed by a distance less than D, or if desired does not project at all (depending upon the depth of the recess or rebate).

It will also be understood that a further recess must be provided for the castor in its transport position, i.e. in its tranport position T a large part of the castor wheel 22 and support bracket 24 lies "inside" (above) the surface 20.

A suitable recess can typically be provided without difficulty; and on a bed for example it is known that the surface 20 would be provided by one of the frame members providing the structural strength of the bed, the mounting bracket 14 being positionable and orientable so that the castor 12 in its transport position T lies between the frame members.

In common with prior art castors, the castor comprises a wheel 22 mounted upon an axle 26 (see Fig. 2) carried by a support bracket 24. The support bracket 24 is connected to a shaft 30 which can be located in the socket 16 of the mounting bracket 14. In order for the support bracket 24 to swivel relative to the mounting bracket, it is known that the shaft 30 is rotatable within the socket 16, but it is more typical that the support bracket 24 can swivel about the shaft 30. The present embodiment utilises the latter arrangement, as will be apparent from the following description, but it is possible for the present invention to be utilised also with the former arrangement if desired.

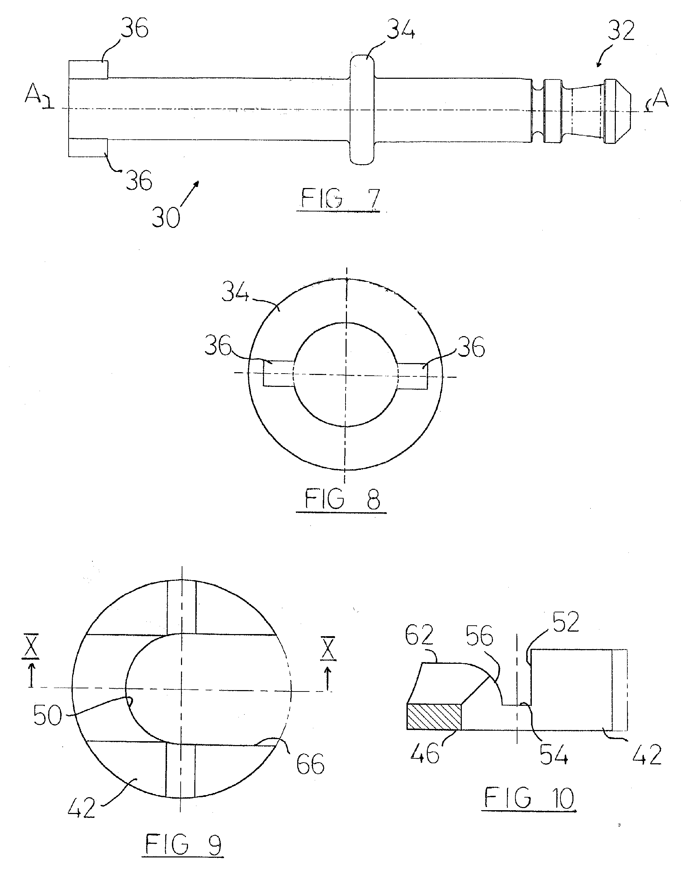

The shaft 30 is better seen in Figs. 7 and 8. It has a first end 32 adapted to cooperate with internal components in the support bracket 24, the first end being designed to allow the support bracket 24 to rotate substantially freely relative to the shaft 30, and yet be substantially permanently secured thereto. The shaft 30 also has an annular collar 34, and at its other end a pair of lugs or keys 36, the purpose of the collar 34 and lugs 36 being explained below.

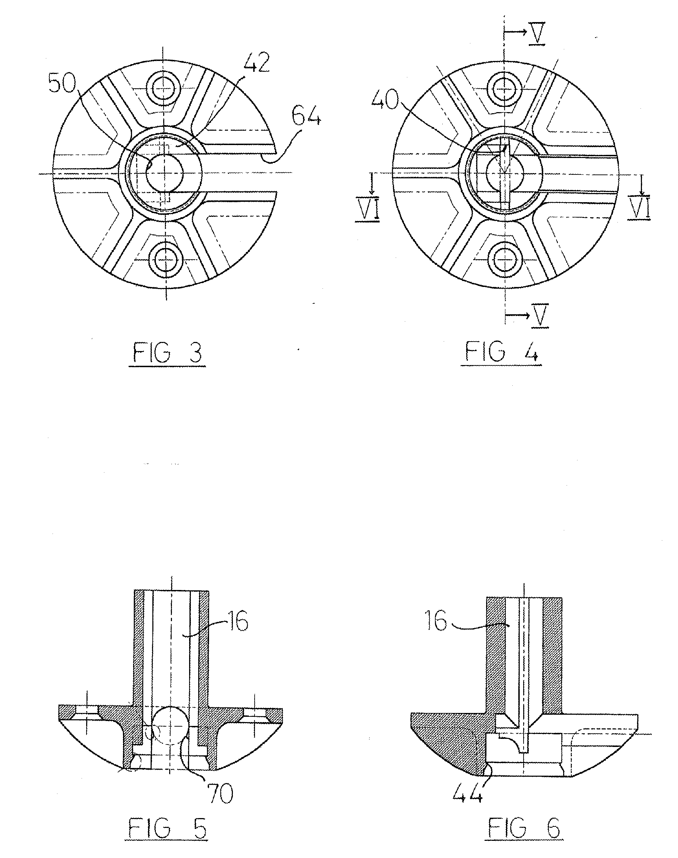

As will be seen from Fig.1, the socket 16 includes two channels or key-ways 40 (only one of which is seen in the sectional view of Fig.1, but both channels are visible in Figs. 2 and 4, and shown in dotted outline in Fig.3). The channels 40 can accommodate respective lugs 36. The lugs 36 and channels 40 in this embodiment serve substantially to prevent rotation of the shaft 30 about its longitudinal axis A-A, but allow the shaft 30 to slide longitudinally within the socket 16. In other, less preferred, embodiments the socket 16 can open out at its end opposed to the mounting portion 18 to allow rotation of the shaft 30 in the use position of the castor.

The mounting bracket 14 includes a cap member 42, which is present in Figs. 1-3 and absent in Figs. 4-6, and shown in detail in Figs. 9 and 10. The cap member 42 is retained adjacent the socket 16 by a lip 44, and when so retained presents a substantially flat surface 46 upon which the collar 34 can lie. Thus, in the use position the shaft 30 lies within the socket 16, with the lugs 36 lying within the respective channels 40, and the collar 34 lying against the surface 46 of the cap member. The weight of the bed acts through the collar 34 upon the cap member 42 and helps to retain the cap member 42 in position in the mounting bracket 14.

The cap member 42 has an opening 50 (Figs.3, 9) which can accommodate the shaft 30, and in particular which can accommodate movement of the shaft relative to the mounting bracket 14 in the longitudinal direction as shown by the arrow 52 of Fig.1. However, the opening 50 is smaller than the lugs 36, so that the cap member 42 limits the longitudinal movement of the shaft 30, and retains the shaft in connection with the mounting bracket 14.

The cap member 42 does, however, have its own channels 52 (Fig. 10) which can accomodate the lugs 36, and into which the lugs 36 are moved when the shaft 30 is moved to its most extended longitudinal position relative to the mounting bracket 14. Accordingly, it is the ends 54 of the channels 52 which are engaged by the lugs 36 and which therefore limit the outward longitudinal movement of the shaft 30. The channels 52 of the cap member include a curved surface 56.

When the castor is to be moved from its use position U to its transport position T it is first pulled outwardly so that the shaft 30 moves longitudinally relative to the socket 16. During this movement, the lugs 36 firstly move along the channels 40 in the socket 16 and subsequently leave the channels 40 and enter the channels 52 of the cap member 42. When the shaft 30 has been moved to its most extended position, the castor is in its first intermediate position, with the castor wheel 22 in the position shown I in Fig.1.

In this first intermediate position, the lugs 36 engage the ends 54 of the channels 52, and lie alongside the curved surface 56 of each channel 52. The curved surfaces 56 of the channels 52, and the corresponding recesses 60 in the body of the mounting member 14, allow the lugs 36 sufficient freedom of movement that the shaft 30 can then be pivoted through approximately 90° from its first intermediate position I to a second intermediate position (not shown) adjacent the transport position T.

From its second intermediate position the shaft and castor are movable to the left (as drawn in Fig.1 - see the arrow 68) by a small distance. This small movement is not essential, but is preferred, since it ensures that the castor 12 will not pivot back to its first intermediate position (e.g. under the influence of gravity) without undergoing the reverse small movement first. The small movement is accommodated by the extension 62 of the curved surface 56 of the cap member 42, and the recess 60 in the body of the mounting bracket 14, which allow the end of the shaft 30 and the lugs 36 to move slightly out of alignment with the socket 16.

The mounting portion 18 of the mounting bracket 14 is not completely annular, and includes an opening 64. In a similar fashion, the cap member 42 is not completely annular but includes an opening 66. The purpose of the openings 64 and 66 is to allow pivoting movement of the shaft 30, i.e. when the castor 12 is pivoted into its second intermediate position and transport position T respective parts of the shaft 30 lie within the openings 64 and 66.

As seen in Figs. 2 and 5, the opening 64 includes a pair of opposed lips 70 which help to retain the shaft 30 when the castor is in its transport position T. Thus, when the castor 12 is pivoted into (or away from) its second intermediate position, the shaft 30 must be forced past the lips 70. The force need not be great, but should desirably exceed the force of gravity acting upon the castor 12 so that the castor 12 does not pivot back towards its first intermediate position I by gravity alone. It is expected that the mounting bracket 14 will be made of plastics material, and the shaft 30 of metal, the mounting bracket being sufficiently resilient to allow the shaft 30 to be forced past the lips 70.

To assemble the castor assembly 10, the pre-assembled castor 12 is connected to the mounting bracket 14, in the absence of the cap member 42, by way of the shaft 30 being introduced into the socket 16, with the lugs 36 entering the channels 40. The cap member 42 is then placed around the shaft and pressed into position past the lip 44. The lip 44 is also resilient and substantially prevents subsequent removal of the cap member 42.

If the castor assembly 10 has been fitted to a bed or other item of furniture it may be moved to its transport position T and packaged ready for storage or transportation. In this respect it will be understood that even if the mounting bracket 14 and castor 12 project beyond the periphery of the item of furniture by a distance D this projection is small and readily accommodated within normal packaging materials such as shrink wrapping of the like.

When the item of furniture has been delivered to the customer, the castors may readily be moved to their use position U. Importantly, the customer is always able to move the castor back to its transport position T should this be required. Also, because the castor assembly 10 is fully assembled at the manufacturing location, any damaged or badly-manufactured components can be identified (and replaced or repaired) at the manufacturing location and not at the customer's premises.

In the embodiment described, the shaft 30 is substantially free to move in the direction of its longitudinal axis relative to the socket 16. In such circumstances, if the bed is lifted the castor may move from its use position towards its first intermediate position I. This may not be desirable, and it may therefore be desired to incorporate a retaining lip or the like within the socket 16, or otherwise to increase the friction between the shaft and socket, so as (temporarily) to retain the castor in its use position whether or not the weight of the bed is acting upon it.

## Claims

1. A castor assembly (10) comprising a castor (12) and a mounting bracket (14), the castor having a wheel (22) which is rotatably mounted on an axle (26), the axle being mounted upon a support bracket (24), the support bracket being connected to the mounting bracket, **characterised in that** the castor is movable relative to the mounting bracket between a transport position (T) and a use position (U).

2. A castor assembly according to claim 1 in which the castor is pivotable between its use position and its transport position.

3. A castor assembly according to claim 1 or claim 2 in which the castor has a shaft means (30) and the mounting bracket has a cooperating socket (16) by which the castor is connected to the mounting bracket.

4. A castor assembly according to claim 3 in which the shaft means has a longitudinal axis, the shaft means being longitudinally movable relative to the socket, movement between the use position (U) and the transport position (T) involving longitudinal movement of the shaft means followed by pivoting movement thereof.

5. A castor assembly according to claim 3 or claim 4 in which the shaft means (30) carries at least one lug (36) and the socket (16) has at least one cooperating channel (40) within which the lug(s) can slide.

6. A castor assembly according to any one of claims 1-5 in which the mounting bracket has a cap member (42) with an opening (50) large enough to accommodate the shaft means (30) but not large enough to accommodate the lug(s) (36).

7. A castor assembly according to claim 6 in which the cap member (2) includes at least one channel(s) (52) for the lug(s) (36), the channel(s) being curved to accommodate pivoting movement of the shaft means.

8. A castor assembly according to any one of claims 1-7 in which the mounting bracket (14) includes a mounting portion (18) adapted to enable the mounting bracket to be secured to the item of furniture, and in which the mounting portion has a recess (64) to accommodate a part of the castor (12) in its transport position (T).

9. A castor assembly according to claim 8 in which the recess (62) includes at least one rib (70) adapted to retain the castor in its transport position (T).

10. A mounting bracket (14) for use with a castor assembly (10) according to any one of claims 1-9.
